# EUROPEAN PATENT SPECIFICATION

(11) **EP 2 015 536 B1**
(45) Date of publication and mention of the grant of the patent: **02.09.2015**
(21) Application number: 07075590.5
(22) Date of filing: 12.07.2007
(51) Int. Cl.: H04L 29/12

(54) **Managing a device name for an I/O device in an industrial automation system**
Verwaltung eines Gerätenamens für ein E/A-Gerät in einem industriellen Automatisierungssystem
Gestion du nom de dispositif pour un dispositif E/S dans un système d'automatisation industrielle

(43) Date of publication of application: 14.01.2009
(73) Proprietor: Omron Europe B.V., 2132 JD Hoofddorp (NL)
(72) Inventor: Groen, Cornelis Marten, 5237 SZ 's-Hertogenbosch (NL); De Kloe, Stefan Andreas Johannes Adrianus, 5141 GH Waalwijk (NL)
(74) Representative: Algemeen Octrooi- en Merkenbureau B.V.

(56) References cited:
- EP-A- 1 284 446
- EP-A- 1 686 767
- EP-A- 1 770 459
- US-A- 5 966 304
- US-A1- 2004 260 405
- US-B1- 6 560 235

## Description

### Technical field

The invention relates to a method for managing a device name for an I/O device in an industrial automation system, an I/O device and a industrial automation system.

Industrial automation systems for input and output and control, based on field busses like Profibus, are well known in the art. Such systems usually include a network, a busmaster, i.e. an I/O controller, connected to a controller, e.g. a Programmable Logic Controller (PLC), and connected to I/O devices via the fieldbus. The busmaster communicates with the I/O devices in the network, using a protocol based on polling of the I/O devices. An I/O device in itself may comprise a communication controller and I/O ports whereby the communication controller communicates with the busmaster, using the fieldbus and whereby the communication controller can further communicate with input/output (I/O) submodules via a local network, such as for example, Componet.

In more recent years the emergence of industrial automation systems, having a network, based on the Internet protocol, have been witnessed. In such networks I/O devices communicate with a controller, which may be connected to a PLC, using Ethernet and Internet protocol (IP). Events detected by a I/O device can be communicated to the I/O controller or a master module immediately without polling, providing greater flexibility and speed.

From the network I/O devices, connected to such a network, may obtain an IP-address or may have a fixed IP-address with which they can identify themselves within the network and through which communication can take place. On an application level it may be necessary that an I/O device is known by name.

In a configuration phase, the I/O devices are given a device name by means of a supervisor computer and this device name is made known to the controller in the industrial automation network.

Like in the fieldbus situation, an I/O device may comprise a communication controller linked with I/O subunits using a local bus.

An identification problem occurs when an I/O device, or more specifically the communication controller of an I/O device, becomes defective and has to be replaced. In such a case the defective communication controller may be replaced with an communication controller with a different device name or with no device name at all. Document US 2004/0260405 discloses a process control comprising a removable memory device in which identifier, device parameters, data, routines and/or processes may be stored in case of fail over of a component.

From US patent 6,560,235 B1 a universal communication system is known consisting of a number of communication modules that connect automation devices including controllers, sensor actuators and input/output components to various communication networks. In such a system configuration data customizing the presentation of the device and its data to the network is stored in non-volatile memory in the communication module. In this way a single device design can support multiple network types by using appropriately configured modules. The communication module is equipped with interface RAM (IRAM) allowing an automation device CPU to share configuration data with the communication module arranged to communicate with other automation devices via a network.

Another approach to address this problem is to store the current device name in the I/O controller of the industrial automation network. After restart the I/O controller can detect the I/O device, without device name, having the same type and assign the stored device name to the replacement I/O device, i.e. communication controller. Such an approach is for example known from EP 1 770 459 A2.

However if more than one defective communication controller of the same type is to be replaced, since the controller, having the device names, can not discriminate between a plurality replacement communication controllers of the same type without device name.

Another approach known in the art is to provide the communication controller of the I/O device with a device name, construed from for example selector switch settings on the communication controller itself. When replacing a defective communication controller , the device name settings of the defective communication controller can be manually copied to the replacement communication controller by the operator. Such an approach is known from US patent publication no. US 2006/0173955. However, while replacing a defective communication controller, an operator may make a mistake copying the switch settings. Further, the requirement for having switches to create a device name increases I/O device costs and decreases I/O device reliability.

### Summary

Its therefore an object of the present invention to manage the device name such that after replacement of the communication controller of an I/O device, the device name can be automatically restored without operator intervention and fit for replacement of a plurality of communication controllers.

The object is achieved in a method for managing a device name for an I/O device in an industrial automation network, whereby the I/O device comprises a communication controller and at least one subunit adapted for processing input and output commands from the communication controller, whereby the communication controller is arranged to keep in a memory the device name for the I/O device, and whereby the communication controller is communicatively connected to at least one subunit via a local bus structure, the at least one subunit having a memory, the method further comprising receiving the device name as the current device name from the network, storing the device name in the memory of the at least one subunit after receiving the device name via the local bus structure, retrieving the device name from the at least one subunit memory via the local bus structure, subsequently restoring the retrieved device name as the current device name after retrieving the device name.

The method is advantageous, since it utilizes known components, i.e. subunits, no additional or specialised components are needed. A newly replaced communication controller can check the subunits present, connected to the communication controller via the local network, retrieve and restore its device name according to the steps of the method of the invention and become operational without further operator interference.

An embodiment of the first aspect of the invention further comprises the step of comparing the retrieved device name with the current device name, after the step of retrieving the device name form the subunit memory, thus allowing more advanced management of the device name and performing steps dependent on the outcome of the comparison.

If the current device name is not empty and equal to the retrieved device name, no further action is required, since apparently there was no change in device name.

In a further embodiment according to the first aspect of the invention, the step of restoring the device name is performed if the retrieved device name is not equal to the current device name. This has the advantage that the retrieved device name is used to restore the device name in the current device name if there is a discrepancy between the retrieved device name and the current device name.

A further embodiment of the first aspect of the invention further comprises the step of testing whether the retrieved device name is empty. Thus allowing for more advanced management of the device name and performing steps dependent on the outcome of the test.

In a further embodiment of the first aspect of the invention, the step of restoring the device name is performed if the retrieved device name is not equal to the current device name in the I/O device and if the retrieved device name is not empty. This prevents an empty retrieved device name from being restored. This may be the case where subunits are replaced instead of the communication controller.

In a further embodiment of the first aspect of the invention the step of storing the device name in the at least one subunit memory is performed if the retrieved device name is empty. This allows for storing the current device name if one of the at least one subunits has been replaced, or if a new device name was received from the network supervisor during configuration.

A further embodiment of the first aspect of the invention further comprises the step of testing whether the current device name is empty.
In a further embodiment of the first aspect of the invention, the step of storing the device name is performed if the retrieved device name is empty and the current device name is not empty.

In a further embodiment of the first aspect of the invention, the step of retrieving the device name from the at least one subunit memory comprises subsequently retrieving a device name from each of a plurality of subunits, selecting the retrieved device name by majority vote, if at least one device name retrieved from a subunit differs from at least one other device name retrieved from the remaining subunits, selecting a particular subsequently retrieved device name as retrieved device name if there is no majority for one of the subsequently retrieved device names. This has the advantage that if with the communication controller also a minority of subunits is replaced, the correct device name can still be retrieved from the majority of remaining subunits.

The object is also achieved according to an embodiment of a second aspect of the invention by an I/O device which comprises a communication controller, a local network and at least one subunit for an Industrial automation network system, adapted for processing input and output commands from the communication controller (4.1), the communication controller being communicatively connected to the at least one subunit via a local bus structure, the communication controller is arranged for having a current device name, whereby the communication controller is arranged for performing the steps of the method for managing a device name as described above.

The object is also achieved in an industrial automation system comprising a controller, an I/O controller, an industrial automation network, and at least one I/O device, characterized by the at least one I/O device comprising a communication controller, the communication controller being arranged for performing the steps of the above described method.

### BRIEF DESCRIPTION OF THE DRAWINGS

Figure 1 shows an architecture of an industrial automation system using a network, according to the state of the art.
Figure 2 shows an architecture of an I/O device according to the state of the art.
Figure 3 shows a flow diagram for managing a device name according to an embodiment of the invention.
Figure 4 shows a flow diagram for managing an I/O device name according to a further embodiment of the invention.

### DETAILED DESCRIPTION

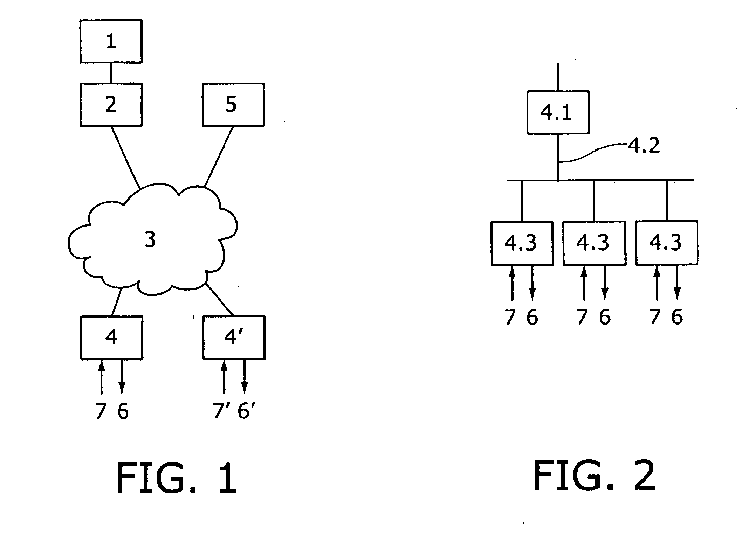

Figure 1 shows an industrial automation system having a controller 1, an I/O controller 2, a industrial automation network 3, I/O devices 4, 4' and a network supervisor 5. The controller 1 may be any industrial control system or device such as a Programmable Logic Controller (PLC).

The controller 1 can obtain all or part of its analog and digital input, and send all or part of its digital and analog output to I/O controller 2, which is connected to the industrial automation network 3. Well known industrial automation networks are fieldbus, or recent faster networks, based on Ethernet and Internet protocol (IP).

The I/O controller communicates via the industrial automation network 3 with the I/O devices 4, 4' which provide analog and/or digital inputs 7, 7' and analog and/or digital outputs 6, 6'.

The network 3 may also be based on other protocols thans Internet, and may be wired or wireless. Any network, compatible for industrial automation, well known for the persons skilled in the art, may be used. An example of such a network is Profinet.

The various components, linked to the industrial automation network, like the I/O controller 2 and the I/O devices 4, 4' may be configured using the network supervisor 5.

The network supervisor 5 may be a personal computer executing a network supervisor program. Via this program a user interface may be provided via which an operator can set up the I/O controller 2 an initialize it. Also the I/O devices 4, 4' can be configured or initialized using the supervisor program.

A part of an initialization or configuration process is assigning names to the I/O devices 4, 4'. In some industrial automation networks like Profinet, I/O devices are known in de network by means of a MAC-address, an IP-address and a device name. The MAC-address is normally bound by the hardware of the I/O device, the IP-address may be obtained from the I/O controller 2 or any other device, responsible for distributing IP-addresses (for example by Dynamic Host Configuration Protocol DHCP) or the IP-address may even be fixed. However on application level, i.e. control functions residing in the I/O controller 2, the I/O devices must be known by their device name.

In some industrial automation networks like Profinet, the I/O controller 2 maintains a table with I/O device names, as such configured by the network supervisor 5. The I/O controller 2 may broadcast the device names throughout the industrial automation network 3 to the I/O devices 4, 4', who will respond with their IP and MAC-addresses upon receiving their device names. As such the I/O controller 2 maintains the network 3 configuration while in operation.

Figure 2 shows an architecture of an I/O device 4 known in the art from industrial automation networks 3 like Profinet.

An I/O device 4, 4' may comprise a communication controller 4.1, an internal bus structure 4.2 and subunits 4.3. The communication controller 4.1 is connected to the industrial automation network 3, from where it receives commands and data from the I/O controller 2, which it translates into input and output commands and data for the subunits 4.3, which subunits include digital and/or analog in- and/or outputs 6,7.

The device name of the I/O device 4, 4' resides in the communication controller 4.1, i.e. in a memory of the communication controller 4.1. The device name currently residing in the communication controller is in this description referred to as current device name.

The internal bus structure 4.2 may be a local bus by which the subunit 4.3 and communication controller 4.1 are interconnected. An example of such a bus structure is Componet, offering an industrial standard for interconnecting sensors, actuators and controllers at high speeds.

The communication controller 4.1 may be arranged to store configuration data and output data for the subunit 4.3, so that after for example a reset, power failure or subunit replacement, the original settings and output data may be restored at the subunit 4.3. Furthermore, the subunit 4.3 may have an internal memory, for storing subunit settings and output data.

An I/O device 4, 4' may be constructed as a box having slots for printed circuit cards, with a back plane for interconnecting the printed circuit boards which can be inserted in the slots, whereby one slot may be reserved for a communication controller 4.1, the internal bus structure may be incorporated in the back plane and the subunits may be placed in the remaining slots. Alternatively, an I/O device and subunits may be modular, such that they can be built together by interconnecting mechanically and electrically forming a single structure. Various implementations of subunits may be possible.

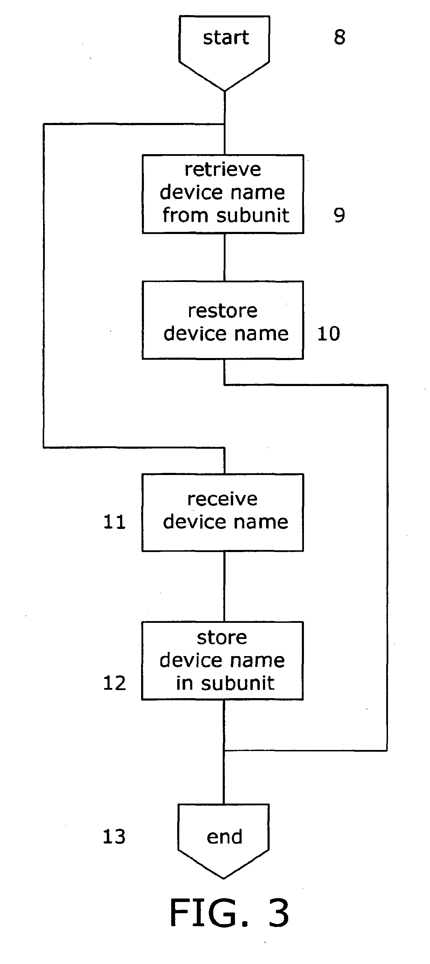

In Figure 3 the method for managing a device name for an I/O device 4,4' in an architecture according to Figures 1 and 2, according to the invention is illustrated.

An I/O device 4, 4' in operation may receive a device name in a configuration phase from the network supervisor. When the device name is received, according to the invention, the device name is stored in the memory of the subunit or subunits 4.3 which is connected to the communication controller 4.1.

At startup of an I/O device 4,4', the communication controller 4,1, can retrieve the device name from the subunit memory that was previously written into the subunit 4, 3 memory. This retrieved device name may then be used to restore the device name of the I/O device.

But even when the device name has been retrieved from the subunit 4.3, the network supervisor 5 may in a (re-)configuration phase still send a device name to the I/O device 4, which will be received by the communication controller 4.1 and subsequently be stored in the subunit 4.3 memory. So the processes for retrieving a device name from a subunit and restoring it, and the process of receiving a device name from the network supervisor and storing it in the subunit memory, are independent processes.

The receiving of a device name and subsequently storing it in the subunit 4.3 memory is normally only performed during system configuration.

The retrieving of the device name from the subunit 4.3 memory and subsequently restoring in the communication controller 4.1 may occur when a communication controller of an I/O device is replaced for maintenance.

By retrieving the device name from the subunit memory, it is no longer necessary for a maintenance engineer to reconfigure the I/O device, i.e. the communication controller. Once the device name is retrieved and restored in the communication controller 4.1, the communication controller 4.1 can respond to the broadcast messages form the I/O controller 2 and respond with its IP-address and MAC-address. This way the communication between the I/O device 4 and the I/O controller 2 is restored on application level after replacement of the communication controller 4.1.

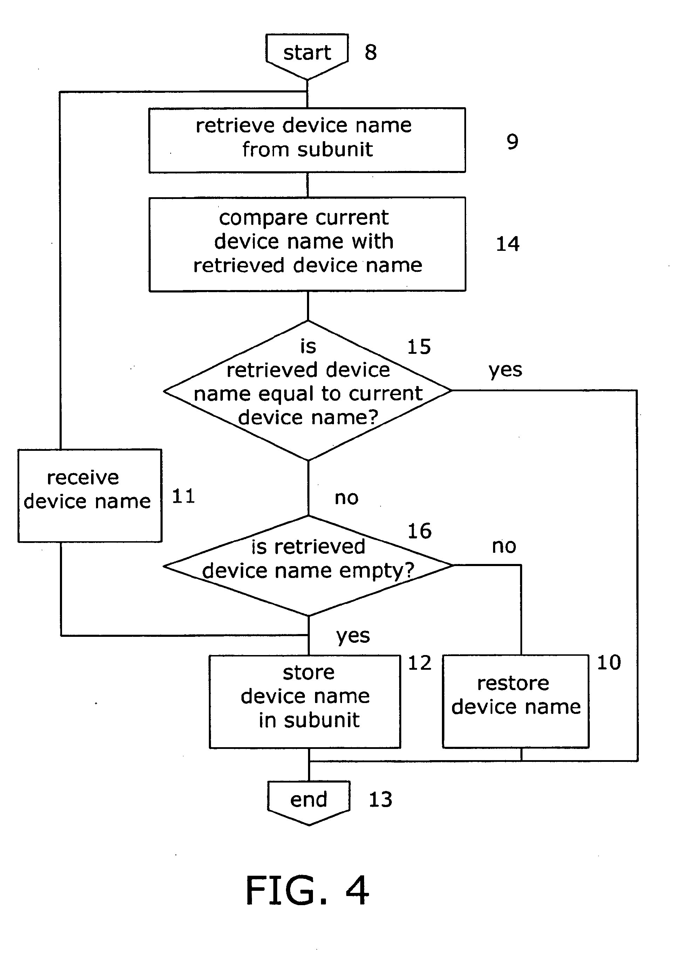

Figure 4 shows a further embodiment according to the invention, wherein after retrieving the device name from subunit 4.3, the retrieved device name is compared with the device name which is already present in the communication controller 4.1.

This situation may occur after reset or start up without replacement of the communication controller 4.1.

If the retrieved device name is equal to the current device name in the communication controller 4.1, then no further action is required. However this may also include the situation where both the retrieve device name and the current device name in the communication controller 4.1 are empty. In that case no communication between the I/O controller 2 en I/O device 4, 4' is possible and the I/O device 4, 4', i.e. the communication controller 4.1 must wait for the network supervisor 5 to send a device name which may be received by the communication controller 4.1.

Receiving a device name from the network supervisor 5 may occur any time in any situation. If the retrieved device name is not equal to the current device name in the communication controller 4.1, then if the retrieved device name is not empty, the retrieved device name may be restored as the current device name of the communication controller 4.1. This is the situation which may occur after replacement of the communication controller 4.1 and where after start up the communication controller 4.1 has an empty current device name, but where the previously stored device name in the subunit 4.3 memory may be retrieved.

If the retrieved device name is empty, however, which implies that the current device name in the communication controller 4.1 is not empty, then the current device name may be stored in the subunit 4.3 memory.

This situation may apply when a subunit 2, 3 is replaced by a subunit 4, 3 with an empty device name.

If the communication controller 4.1 is connected to a plurality of subunits 4.3, it is possible that different device names are retrieved from each of the subunits 4.3. It is possible to pick only the first retrieved device name, or pick any of the retrieved device names. According to an embodiment of the invention it is possible to pick the device name by majority vote. If a plurality of device names is retrieved from the at least one subunits memories, the account of occurrence is determined for each device name. If there is a device name which has a majority count, then that device name will be chosen to be restored in the communication controller 4.1. If there is no majority for one device name, then any, for example the first, of the device names may be picked.

A communication controller 4.1 may comprise a processor a random access memory (RAM), fixed memory (ROM, EPROM, EEPROM, FLASH) having a program with program instruction communication stored into it, and at least one interface for communicating with the I/O controller 2 via the network 3, and at least one interface for communication with subunits 4.3. All or some of these parts may incorporated into an Application Specific Integrated Circuit (ASIC) of Field Programmable Gate Array (FPGA).

A subunit 4.3 comprises a processor, random access memory RAM), fixed memory (ROM, EPROM, EEPROM, FLASH) having a program with program instructions stored into it, and at least one interface for communicating with the communication controller 4.1 via the local network 4.2. The subunit may further comprise analog and digital circuit and may have an analog-to-digital converter or a digital-to-analog converter for digital and/or analog input and/or output.

The embodiments in this description are exemplary only and it must be understood that various changes and modifications are possible without departing from the teaching of the invention as laid down in the following claims.

## Claims

1. Method for managing a device name for an I/O device (4, 4') for an industrial automation network, whereby the I/O device (4, 4') comprises a communication controller (4.1) and at least one subunit (4.3) adapted for processing input and output commands from the communication controller (4.1), whereby the communication controller (4.1) is arranged to keep in a memory the current device name for the I/O device (4, 4'), and whereby the communication controller (4.1) is communicatively connected to the at least one subunit (4.3) via a local bus structure (4.2), the at least one subunit (4.3) having a memory, the method comprising:
- the communication controller (4.1) receiving the device name from the network;
- the communication controller (4.1) storing the device name in a communication controller memory as the current device name;
- the communication controller (4.1) storing the device name in a memory of the at least one subunit (4.3) via the local bus structure (4.2) after receiving the device name;
- the communication controller (4.1) retrieving the device name from the at least one subunit memory via the local bus structure (4.2);
- the communication controller (4.1)_subsequently restoring the retrieved device name as the current device name after retrieving the device name.

2. Method according to claim 1, further comprising the step of the communication controller (4.1) comparing the retrieved device name with the current device name, after the step of retrieving the device name form the subunit memory.

3. Method according to claim 1 or 2, wherein the step of the communication controller (4.1) restoring the device name is performed if the retrieved device name is not equal to the current device name.

4. Method according to claim 3, further comprising the step of the communication controller (4.1) testing whether the retrieved device name is empty.

5. Method according to claim 4, wherein the step of the communication controller (4.1)_restoring the device name is performed if the retrieved device name is not equal to the current device name in the I/O device (4, 4') is and if the retrieved device name is not empty.

6. Method according claim 5, whereby the step of the communication controller (4.1) storing the device name in the at least one subunit memory is performed if the retrieved device name is empty.

7. Method according claim 7, further comprising the step of the communication controller (4.1) testing whether the current device name is empty.

8. Method according to claim 8, whereby the step of the communication controller (4.1) storing the device name is performed if the retrieved device name is empty and the current device name is not empty.

9. Method according to any of the preceding claims, whereby the step of the communication controller (4.1) retrieving the device name from the at least subunit memory comprises:
- the communication controller (4.1) subsequently retrieving a device name from each of a plurality of subunits (4.3);
- the communication controller (4.1) selecting the retrieved device name by majority vote, if at least one device name retrieved from a subunit (4.3) differs from at least one other device name retrieved from the remaining subunits (4.3);
- the communication controller (4.1) selecting a particular subsequently retrieved device name as retrieved device name if there is no majority for one of the subsequently retrieved device names.

10. I/O device (4, 4') for an Industrial automation network system, comprising a communication controller (4.1), at least one subunit (4.3) adapted for processing input and output commands from the communication controller (4.1), the communication controller (4.1) communicatively connected to the at least one subunit (4.3) via a local bus structure (4.2), the communication controller (4.1) having a memory for a device name **characterised by** the communication controller (4.1) being arranged for performing the steps of the method for managing the device name according to any one of the preceding claims 1 to 9.

11. An industrial automation system comprising a controller, an I/O controller, an industrial automation network, and I/O devices (4, 4'), **characterized by** the I/O devices (4, 4') being arranged for performing the steps of the method according to any of the claims 1 to 9.

## Patentansprüche

1. Verfahren zum Verwalten eines Gerätenamens für eine Eingabe-/Ausgabe-Einheit (4, 4') für ein industrielles Automatisierungsnetzwerk, wobei die Eingabe-/Ausgabe-Einheit (4, 4') eine Kommunikationssteuerung (4.1) und wenigstens eine Untereinheit (4.3), die zum Verarbeiten der Ein- und Ausgabe-Befehle von der Kommunikationssteuerung (4.1) angepasst ist, umfasst, wobei die Kommunikationssteuerung (4.1) eingerichtet ist, in einem Speicher den aktuellen Gerätnamen für die Eingabe-/Ausgabe-Einheit (4, 4') zu halten, und wobei die Kommunikationssteuerung (4.1) kommunikativ mit der wenigstens einen Untereinheit (4.3) über eine lokale Busstruktur (4.2) verbunden ist, wobei die wenigstens eine Untereinheit (4.3) einen Speicher hat, wobei das Verfahren umfasst:
- die Kommunikationssteuerung (4.1) erhält den Gerätenamen von dem Netzwerk;
- die Kommunikationssteuerung (4.1) speichert den Gerätenamen in einem Kommunikationssteuerungsspeicher als aktuellen Gerätenamen;
- die Kommunikationssteuerung (4.1) speichert den Gerätenamen in einem Speicher der wenigstens einen Untereinheit (4.3) über die lokale Busstruktur (4.2) nach dem Erhalten des Gerätenamens;
- die Kommunikationssteuerung (4.1) ruft den Gerätenamen aus dem wenigstens einen Untereinheitsspeicher über die lokale Busstruktur (4.2) ab;
- die Kommunikationssteuerung (4.1) speichert anschließend den abgerufenen Gerätenamen als aktuellen Gerätenamen nach dem Abrufen des Gerätenamens um.

2. Verfahren nach Anspruch 1, ferner umfassend den Schritt, dass die Kommunikationssteuerung (4.1) den abgerufenen Gerätenamen mit dem aktuellen Gerätenamen vergleicht, nach dem Schritt des Abrufens des Gerätenamens von dem Untereinheitsspeicher.

3. Verfahren nach Anspruch 1 oder 2, wobei der Schritt, dass die Kommunikationssteuerung (4.1) den Gerätenamen umspeichert, ausgeführt wird, wenn der abgerufene Gerätename nicht gleich dem aktuellen Gerätenamen ist.

4. Verfahren nach Anspruch 3, ferner umfassend den Schritt, dass die Kommunikationssteuerung (4.1) prüft, ob der abgerufene Gerätename leer ist.

5. Verfahren nach Anspruch 4, wobei der Schritt, dass die Kommunikationssteuerung (4.1) den Gerätenamen umspeichert, ausgeführt wird, wenn der abgerufene Gerätename nicht gleich dem aktuellen Gerätenamen in der Eingabe-/Ausgabe-Einheit (4, 4') ist und wenn der abgerufene Gerätename nicht leer ist.

6. Verfahren nach Anspruch 5, wobei der Schritt, dass die Kommunikationssteuerung (4.1) den Gerätenamen in dem wenigstens einen Untereinheitsspeicher speichert, ausgeführt wird, wenn der abgerufene Gerätename leer ist.

7. Verfahren nach Anspruch 6, ferner umfassend den Schritt, dass die Kommunikationssteuerung (4.1) prüft, ob der aktuelle Gerätename leer ist.

8. Verfahren nach Anspruch 7, wobei der Schritt, dass die Kommunikationssteuerung (4.1) den Gerätenamen speichert, ausgeführt wird, wenn der abgerufene Gerätename leer ist und der aktuelle Gerätename nicht leer ist.

9. Verfahren nach einem der vorhergehenden Ansprüche, wobei der Schritt, dass die Kommunikationssteuerung (4.1) den Gerätenamen von dem wenigstens einen Untereinheitsspeicher abruft, umfasst:
- die Kommunikationssteuerung (4.1) ruft anschließend einen Gerätenamen von jeder einer Vielzahl von Untereinheiten (4.3) ab;
- die Kommunikationssteuerung (4.1) wählt den abgerufenen Gerätenamen mit Stimmenmehrheit aus, wenn wenigstens ein aus einer Untereinheit (4.3) abgerufener Gerätename sich von wenigstens einem anderen aus den verbleibenden Untereinheiten (4.3) abgerufenen Gerätenamen unterscheidet;
- die Kommunikationssteuerung (4.1) wählt einen bestimmten anschließend abgerufenen Gerätenamen als abgerufenen Gerätename aus, wenn es keine Mehrheit für einen der anschließend abgerufenen Gerätenamen gibt.

10. Eine Eingabe-/Ausgabe-Einheit (4, 4') für ein industrielles Automatisierungsnetzwerksystem, umfassend eine Kommunikationssteuerung (4.1), wenigstens eine Untereinheit (4.3), die zum Verarbeiten der Ein- und Ausgabe-Befehle von der Kommunikationssteuerung (4.1) angepasst ist, wobei die Kommunikationssteuerung (4.1) kommunikativ mit der wenigstens einen Untereinheit (4.3) über eine lokale Busstruktur (4.2) verbunden ist, wobei die Kommunikationssteuerung (4.1) einen Speicher für einen Gerätenamen hat,
**dadurch gekennzeichnet, dass**
die Kommunikationssteuerung (4.1) zum Durchführen der Schritte des Verfahrens zum Verwalten eines Gerätenamens nach einem der vorhergehenden Ansprüche 1 bis 9 eingerichtet ist.

11. Ein industrielles Automatisierungssystem mit einer Steuerung, einer Eingabe-/Ausgabe-Steuerung, einem industriellen Automatisierungsnetzwerk und Eingabe-/Ausgabe-Einheiten (4, 4')
**dadurch gekennzeichnet, dass**
die Eingabe-/Ausgabe-Einheiten (4, 4') zum Durchführen der Schritte des Verfahrens nach einem der Ansprüche 1 bis 9 eingerichtet ist.

## Revendications

1. Procédé pour gérer un nom de dispositif pour un dispositif E/S (4, 4') pour un réseau d'automatisation industrielle, moyennant quoi le dispositif E/S (4, 4') comprend un contrôleur de communication (4.1) et au moins une sous-unité (4.3) adaptée pour traiter des commande d'entrée et de sortie en provenance du contrôleur de communication (4.1), moyennant quoi le contrôleur de communication (4.1) est agencé pour conserver dans une mémoire le nom de dispositif actuel du dispositif E/S (4, 4'), et moyennant quoi le contrôleur de communication (4.1) est connecté de manière communicative à la au moins une sous-unité (4.3) via une structure de bus local (4.2), la au moins une sous-unité (4.3) ayant une mémoire, le procédé comprenant :
- le contrôleur de communication (4.1) recevant le nom de dispositif en provenance du réseau ;
- le contrôleur de communication (4.1) stockant le nom de dispositif dans une mémoire de contrôleur de communication comme le nom de dispositif actuel ;
- le contrôleur de communication (4.1) stockant le nom de dispositif dans une mémoire de la au moins une sous-unité (4.3) via la structure de bus local (4.2) après avoir reçu le nom de dispositif ;
- le contrôleur de communication (4.1) récupérant le nom de dispositif à partir de la au moins une mémoire de sous-unité via la structure de bus local (4.2) ;
- le contrôleur de communication (4.1) restaurant par la suite le nom de dispositif récupéré comme le nom de dispositif actuel après avoir récupéré le nom de dispositif.

2. Procédé selon la revendication 1, comprenant en outre l'étape du contrôleur de communication (4.1) comparant le nom de dispositif récupéré avec le nom de dispositif actuel, après l'étape de récupération du nom de dispositif à partir de la mémoire de sous-unité.

3. Procédé selon la revendication 1 ou 2, dans lequel l'étape du contrôleur de communication (4.1) restaurant le nom de dispositif est exécutée si le nom de dispositif récupéré n'est pas égal au nom de dispositif actuel.

4. Procédé selon la revendication 3, comprenant en outre l'étape du contrôleur de communication (4.1) testant si le nom de dispositif récupéré est vide.

5. Procédé selon la revendication 4, dans lequel l'étape du contrôleur de communication (4.1) restaurant le nom de dispositif est exécutée si le nom de dispositif récupéré n'est pas égal au nom de dispositif actuel dans le dispositif E/S (4, 4') et si le nom de dispositif récupéré n'est pas vide.

6. Procédé selon la revendication 5, dans lequel l'étape du contrôleur de communication (4.1) stockant le nom de dispositif dans la au moins une mémoire de sous-unité est exécutée si le nom de dispositif récupéré est vide.

7. Procédé selon la revendication 6, comprenant en outre l'étape du contrôleur de communication (4.1) testant si le nom de dispositif actuel est vide.

8. Procédé selon la revendication 7, moyennant quoi l'étape du contrôleur de communication (4.1) stockant le nom de dispositif est exécutée si le nom de dispositif récupéré est vide et le nom de dispositif actuel n'est pas vide.

9. Procédé selon l'une quelconque des revendications précédentes, moyennant quoi l'étape du contrôleur de communication (4.1) récupérant le nom de dispositif à partir de la au moins une mémoire de sous-unité comprend :
- le contrôleur de communication (4.1) récupérant par la suite un nom de dispositif à partir de chacune d'une pluralité de sous-unités (4.3) ;
- le contrôleur de communication (4.1) sélectionnant le nom de dispositif récupéré par vote majoritaire, si au moins un nom de dispositif récupéré à partir d'une sous-unité (4.3) diffère d'au moins un autre nom de dispositif récupéré à partir des sous-unités restantes (4.3) ;
- le contrôleur de communication (4.1) sélectionnant un nom de dispositif récupéré par la suite particulier comme nom de dispositif récupéré s'il n'y a pas de majorité pour un des noms de dispositif récupérés par la suite.

10. Dispositif E/S (4, 4') pour un système de réseau d'automatisation industrielle, comprenant un contrôleur de communication (4.1), au moins une sous-unité (4.3) adaptée pour traiter des commande d'entrée et de sortie en provenance du contrôleur de communication (4.1), le contrôleur de communication (4.1) connecté de manière communicative à la au moins une sous-unité (4.3) via une structure de bus local (4.2), le contrôleur de communication (4.1) ayant une mémoire pour un nom de dispositif, **caractérisé par** le contrôleur de communication (4.1) étant agencé pour exécuter les étapes du procédé pour gérer le nom de dispositif selon l'une quelconque des revendications 1 à 9 précédentes.

11. Système d'automatisation industrielle comprenant un contrôleur, un contrôleur E/S, un réseau d'automatisation industrielle et des dispositifs E/S (4, 4'), **caractérisé par** les dispositifs E/S (4, 4') étant agencés pour exécuter les étapes du procédé selon l'une quelconque des revendications 1 à 9.
